# FASCICULE DE BREVET EUROPEEN

(11) **EP 2 750 850 B1**
(45) Date de publication et mention de la délivrance du brevet: **10.06.2015**
(21) Numéro de dépôt: 12753108.5
(22) Date de dépôt: 23.08.2012
(51) Int. Cl.: B29C 39/10, B29C 39/24, B29C 39/44, G01D 11/24, G01D 11/26

(54) **DISPOSITIF DE CONTRÔLE DE NIVEAU DE RÉSINE POUR LE REMPLISSAGE D'UN DÉTECTEUR AVEC ZONE D'ÉPARGNE**
VORRICHTUNG ZUR REGELUNG DES FÜLLSTANDES EINES KUNSTHARZES ZUM FÜLLEN EINES DETEKTORS MIT EINER NICHT ZU FÜLLENDEN ZONE
DEVICE FOR CONTROLLING THE LEVEL OF RESIN FOR FILLING A DETECTOR HAVING A ZONE THAT IS NOT TO BE FILLED

(30) Priorité: 01.09.2011 FR 1157709
(43) Date de publication de la demande: 09.07.2014
(73) Titulaire: Schneider Electric Industries SAS, 92500 Rueil-Malmaison (FR)
(72) Inventeur: GAILLEDRAT, Joël, F-16430 Champniers (FR); DOUMALIN, Philippe, F-16160 Gond-Pontouvre (FR)
(74) Mandataire: Dufresne, Thierry
(86) Numéro de dépôt international: PCT/EP2012/066418
(87) Numéro de publication internationale: WO 2013/030086

(56) Documents cités:
- EP-A1- 0 505 271
- EP-A1- 0 787 974
- WO-A1-90/15709
- US-A- 5 605 656
- US-A1- 2007 161 268

## Description

### Domaine technique de l'invention

La présente invention se rapporte à des produits, en particulier des détecteurs paramétrables, dont la résistance mécanique et l'étanchéité sont renforcées par le remplissage de leur corps de base par de la résine. Plus précisément, la présente invention concerne le remplissage d'un corps avec de la résine, de préférence selon une technique dite "de centrifugation", ledit corps comprenant une zone à épargner, c'est-à-dire ne devant pas être noyée de résine, typiquement parce qu'elle comporte des composants électroniques. Le dispositif selon l'invention permet ainsi d'effectuer le remplissage d'un tel corps et l'arrêt automatique dudit remplissage de telle sorte que la zone à épargner soit effectivement épargnée de résine.

### Etat de la technique

De manière connue, les corps de base de produits tels que des détecteurs paramétrables sont noyés de résine de manière à garantir leur bonne résistance mécanique ainsi que leur étanchéité. Dans ce contexte, les produits non paramétrables sont généralement totalement remplis de résine tandis que pour les produits paramétrables, comportant, dans leur corps de base, des composants électroniques - diode électroluminescente, éléments de réglage, interrupteur -, la résine injectée ne doit en aucun cas venir en contact avec lesdits composants électroniques.

EP-A-505271 décrit un procédé pour noyer dans de la résine l'intérieur d'un appareil électrique tel qu'un détecteur de proximité et appareil ainsi obtenu.

Cependant, les techniques connues de remplissage, et en particulier la technique de remplissage par centrifugation, ne permettent pas de maîtriser de manière automatique le niveau de remplissage du corps de base. Pour les produits paramétrables dont il est nécessaire de remplir le corps de base par de la résine, on utilise par conséquent aujourd'hui une technique de remplissage par gravité, complexe et coûteuse car cette technique est nécessairement unitaire, délicate, et s'effectue sous le contrôle d'un opérateur.

Le but de l'invention est donc de proposer une solution de remplissage de corps de base de produits tels que des détecteurs paramétrables qui puisse être réalisée de manière totalement automatique. L'invention concerne ainsi un dispositif permettant l'amenée de résine à l'intérieur d'un corps de base comprenant une colonne d'injection pour introduire la résine à l'intérieur dudit corps de base, de préférence selon une technique de centrifugation, la hauteur de ladite colonne d'injection étant configurée de manière à ce que l'injection de résine dans le corps de base stoppe automatiquement à un niveau épargnant une zone comprenant des composants ne devant pas être mis en contact avec la résine.

### Exposé de l'invention

Ainsi, l'invention concerne un dispositif comprenant un corps de base et un dispositif d'amenée de résine adapté sur ledit corps de base, pour le remplissage dudit corps de base par de la résine, ledit corps de base comprenant une zone à épargner devant être épargnée par la résine au terme dudit remplissage, ledit corps de base comprenant une ouverture au niveau d'une extrémité supérieure, la zone à épargner étant située du côté de ladite extrémité supérieure du corps de base et s'étendant à l'intérieur du corps de base, ledit dispositif d'amenée de résine comprenant une colonne d'injection coïncidant avec ladite ouverture et s'étendant à l'intérieur du corps de base, de sorte que, lors du remplissage, de la résine pénètre à l'intérieur du corps de base via la colonne d'injection, le dispositif d'amenée de résine étant caractérisé en ce que la colonne d'injection s'étend à l'intérieur dudit corps de base plus profondément que la zone à épargner, sur une hauteur configurée de telle manière que lorsque la résine atteint, au cours du remplissage, ladite colonne d'injection, l'air emprisonné dans le corps de base est comprimé dans la zone à épargner jusqu'à ce que s'opère un équilibre entre la pression de l'air dans la zone à épargner et la pression de la résine dans la colonne d'injection de sorte que le remplissage s'arrête automatiquement en épargnant la zone à épargner.

Avantageusement, le remplissage dudit corps de base par de la résine est réalisé selon une technique de centrifugation de sorte que, lorsque le corps de base sur lequel est adapté le dispositif d'amenée de résine est soumis à un mouvement de rotation, de la résine pénètre à l'intérieur du corps de base via la colonne d'injection, sous l'effet de la force centrifuge.

Avantageusement, le dispositif d'amenée de résine peut comprendre par ailleurs une pipette amovible apte à être branchée sur la colonne d'injection de sorte que, lors du remplissage, la résine pénètre à l'intérieur du corps de base via la pipette et la colonne d'injection.

Selon un mode de réalisation, la colonne d'injection est aménagée dans la masse du corps de base.

Selon un autre mode de réalisation, la colonne d'injection est aménagée dans un corps distinct du corps de base.

L'invention concerne également un détecteur comprenant un corps de base et un dispositif d'amenée de résine, tels que décrits précédemment.

Avantageusement, dans ce détecteur, la zone à épargner comprend un composant électronique.

La zone à épargner peut comprendre une diode électroluminescente.

La zone à épargner peut comprendre un dispositif de communication.

### Brève description des figures

D'autres caractéristiques et avantages vont apparaître dans la description détaillée qui suit faite en regard des dessins annexés qui représentent :
- la figure 1 : le schéma d'un corps de base de détecteur paramétrable ;
- la figure 2 : une vue en coupe du dispositif d'amenée de résine selon l'invention, adapté sur un corps de base de détecteur paramétrable ;
- la figure 3 : une vue en coupe d'un corps de base d'un détecteur paramétrable dont le remplissage par de la résine est achevé.

### Description détaillée

L'invention concerne un dispositif comprenant un corps de base destiné à être rempli par de la résine à l'exception d'une zone à épargner, par exemple parce qu'elle comprend des composants électroniques. Le dispositif selon l'invention comprend un dispositif d'amenée de résine conçu pour permettre le remplissage automatique adapté du corps de base.

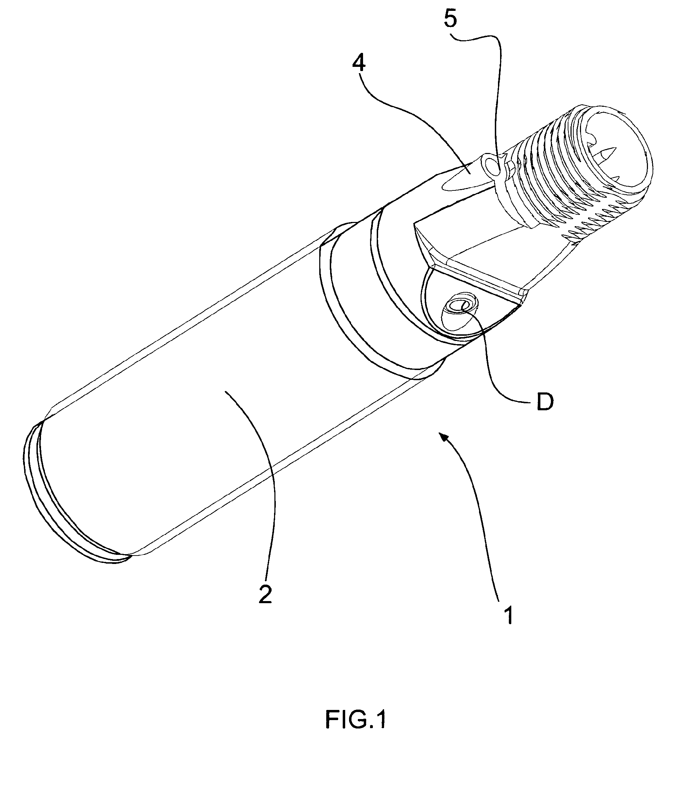

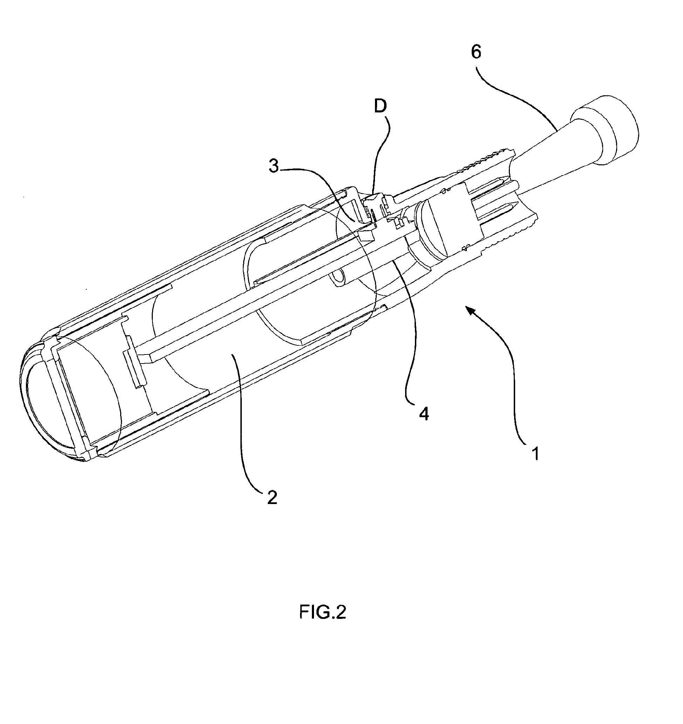

En référence à la figure 1, le dispositif selon l'invention est représenté sous la forme d'un détecteur paramétrable 1. Comme on peut le voir à la figure 2, le détecteur paramétrable 1 comprend un corps de base 2 et une zone à épargner 3. La zone à épargner 3 comprend typiquement, dans le cadre d'un détecteur paramétrable, une diode D, un interrupteur, ou encore des composants électroniques de communication.

Le détecteur paramétrable 1 comporte par ailleurs un dispositif d'amenée de résine matérialisé par la colonne d'injection 4 et une pipette 6. Comme vu précédemment, certains produits, tels que des détecteurs paramétrables 1, nécessitent le remplissage par de la résine de leur corps de base 2, à l'exception de la zone à épargner 3, à des fins de renforcement de leur résistance mécanique et de leur étanchéité. De préférence, le remplissage du corps de base 2 se fait par centrifugation. Selon cette technique de remplissage par centrifugation, un ensemble de produits sont alors disposés horizontalement dans une centrifugeuse et de la résine pénètre dans lesdits produits par l'ouverture 5 et la colonne d'injection 4 et vient se plaquer au fond du corps de base 2, du côté opposé à l'ouverture 5. La méthode de remplissage par centrifugation est préférée car, sous l'effet de la force centrifuge, l'apparition de bulles d'air au coeur de la résine est très peu probable alors que de telles bulles d'air, préjudiciables, peuvent apparaître dans le cas d'un remplissage par gravité.

En tout état de cause, quel que soit le mode choisi pour le remplissage du corps de base 2 par de la résine, ladite résine est amenée dans le produit par l'intermédiaire de la colonne d'injection 4.

Selon l'invention, le niveau de remplissage du corps de base 2, de manière à épargner la zone à épargner 3, est réglé automatiquement grâce à une configuration adaptée de la longueur de la colonne d'injection 4, qui s'étend à l'intérieur du corps de base 2, au regard du volume de la zone à épargner 3. Ainsi, lors du remplissage du corps de base 2, au fur et à mesure que la résine pénètre dans le détecteur paramétrable 1, l'air contenu dans le corps de base 2 est comprimé et évacué en traversant la colonne d'injection 4. Comme représenté à la figure 2, la longueur de la colonne d'injection 4 est réglée de telle manière que, lorsque le niveau de la résine dans le corps de base 2 atteint le bas de la colonne d'injection 4, l'air ne peut plus s'échapper et se trouve comprimé dans la zone à épargner 3, située entre l'extrémité de la colonne d'injection 4 à l'intérieur du corps de base 2 et l'extrémité supérieure du corps de base 2 présentant l'ouverture 5. Sous l'effet de la force de gravité ou, de préférence, de la force centrifuge, la résine continue à pénétrer dans le détecteur paramétrable 1 jusqu'à ce que la pression de l'air dans la zone à épargner 3 et la pression de la résine dans la colonne d'injection 4 s'équilibrent. Le remplissage du corps de base 2 s'arrête alors automatiquement.

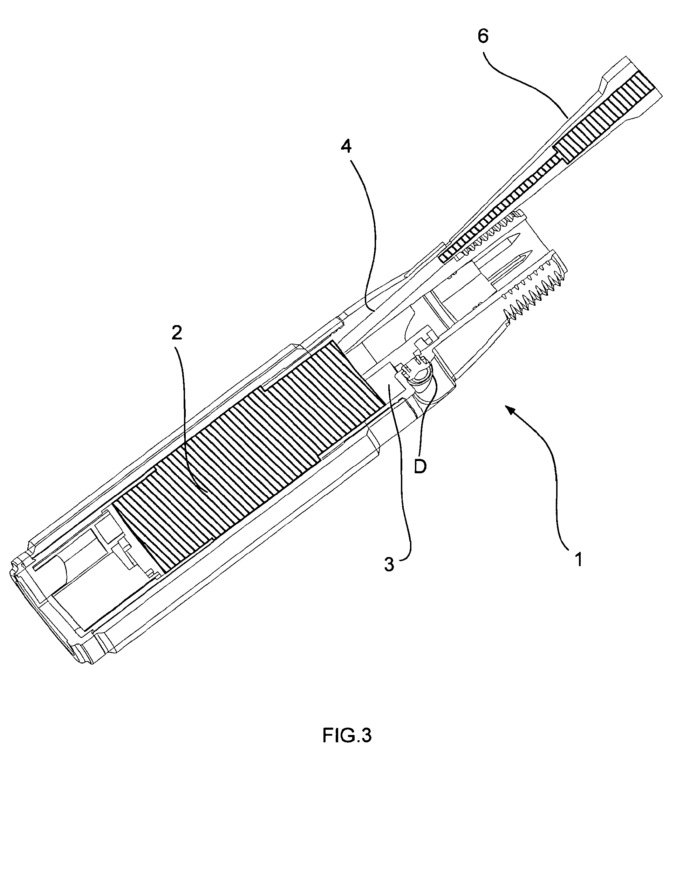

Comme représenté à la figure 3, dans le mode de réalisation préféré de l'invention, le remplissage du corps de base 2 se fait par centrifugation et une pipette 6 est adaptée sur la colonne d'injection 4 pour compléter le dispositif d'amenée de résine selon l'invention, destiné à amener la résine dans le corps de base 2.

En résumé, l'invention a pour objet un dispositif comprenant un corps de base à remplir de résine et une zone à épargner ; pour permettre un arrêt automatique du remplissage lorsque la résine a atteint le niveau souhaité, la présente invention prévoit une colonne d'injection s'étendant à l'intérieur du produit et présentant une longueur réglée de telle manière que lors du remplissage du corps de base par de la résine, un équilibre entre la pression de la résine et la pression de l'air dans la zone à épargner située entre l'extrémité de la colonne d'injection et l'extrémité supérieure du corps de base est obtenu automatiquement après que la résine a atteint l'extrémité de ladite colonne d'injection, et provoque l'arrêt du remplissage du corps de base.

## Revendications

1. Dispositif comprenant un corps de base (2) et un dispositif d'amenée de résine adapté sur ledit corps de base, pour le remplissage dudit corps de base (2) par de la résine, ledit corps de base (2) comprenant une zone à épargner (3) devant être épargnée par la résine au terme dudit remplissage, ledit corps de base (2) comprenant une ouverture (5) au niveau d'une extrémité supérieure, la zone à épargner (3) étant située du côté de ladite extrémité supérieure du corps de base (2) et s'étendant à l'intérieur du corps de base (2), ledit dispositif d'amenée de résine comprenant une colonne d'injection (4) coïncidant avec ladite ouverture (5) et s'étendant à l'intérieur du corps de base (2), de sorte que, lors du remplissage, de la résine pénètre à l'intérieur du corps de base (2) via la colonne d'injection (4), le dispositif d'amenée de résine étant **caractérisé en ce que** la colonne d'injection (4) s'étend à l'intérieur dudit corps de base (2) plus profondément que la zone à épargner (3), sur une hauteur configurée de telle manière que lorsque la résine atteint, au cours du remplissage, ladite colonne d'injection (4), l'air emprisonné dans le corps de base (2) est comprimé dans la zone à épargner (3) jusqu'à ce que s'opère un équilibre entre la pression de l'air dans la zone à épargner (3) et la pression de la résine dans la colonne d'injection (4) de sorte que le remplissage s'arrête automatiquement en épargnant la zone à épargner (3).

2. Dispositif selon la revendication 1, le remplissage dudit corps de base (2) par de la résine étant réalisé selon une technique de centrifugation de sorte que, lorsque le corps de base (2) sur lequel est adapté le dispositif d'amenée de résine est soumis à un mouvement de rotation, de la résine pénètre à l'intérieur du corps de base (2) via la colonne d'injection (4), sous l'effet de la force centrifuge.

3. Dispositif selon l'une des revendications 1 ou 2, le dispositif d'amenée de résine comprenant par ailleurs une pipette (6) amovible apte à être branchée sur la colonne d'injection (4) de sorte que, lors du remplissage, la résine pénètre à l'intérieur du corps de base (2) via la pipette (6) et la colonne d'injection (4).

4. Dispositif selon l'une quelconque des revendications 1 à 3, **caractérisé en ce que** la colonne d'injection (4) est aménagée dans la masse du corps de base (2).

5. Dispositif selon l'une quelconque des revendications 1 à 3, **caractérisé en ce que** la colonne d'injection (4) est aménagée dans un corps distinct du corps de base (2).

6. Détecteur comprenant un corps de base (2) et un dispositif d'amenée de résine, selon l'une quelconque des revendications 1 à 5.

7. Détecteur selon la revendication 6, **caractérisé en ce que** la zone à épargner (3) comprend un composant électronique.

8. Détecteur selon l'une quelconque des revendications 6 à 7, **caractérisé en ce que** la zone à épargner (3) comprend une diode électroluminescente (D).

9. Détecteur selon l'une quelconque des revendications 6 à 8, **caractérisé en ce que** la zone à épargner (3) comprend un dispositif de communication.

## Patentansprüche

1. Vorrichtung, umfassend einen Basiskörper (2) und eine Zuführvorrichtung von Harz, die an den Basiskörper angepasst ist, um den Basiskörper (2) mit dem Harz zu füllen, wobei der Basiskörper (2) eine auszusparende Zone (3) umfasst, die von dem Harz nach dem Füllen auszusparen ist, wobei der Basiskörper (2) eine Öffnung (5) auf Höhe eines oberen Endes umfasst, wobei die auszusparende Zone (3) auf der Seite des oberen Endes des Basiskörpers (2) angeordnet ist und sich im Inneren des Basiskörpers (2) erstreckt, wobei die Harzzuführvorrichtung eine Einspritzsäule (4) umfasst, die mit der Öffnung (5) zusammenfällt und sich im Inneren des Basiskörpers (2) erstreckt, so dass beim Füllen Harz in das Innere des Basiskörpers (2) über die Einspritzsäule (4) eindringt, wobei die Harzzuführvorrichtung **dadurch gekennzeichnet ist, dass** sich die Einspritzsäule (4) im Inneren des Basiskörpers (2) tiefer als die auszusparende Zone (3) auf einer Höhe erstreckt, die derart vorgesehen ist, dass, wenn das Harz während des Füllens die Einspritzsäule (4) erreicht, die in dem Basiskörper (2) eingeschlossene Luft in der auszusparenden Zone (3) komprimiert wird, bis ein Gleichgewicht zwischen dem Druck der Luft in der auszusparenden Zone (3) und dem Druck des Harzes in der Einspritzsäule (4) hergestellt ist, so dass das Füllen automatisch angehalten wird, wobei die auszusparende Zone (3) ausgespart wird.

2. Vorrichtung nach Anspruch 1, wobei das Füllen des Basiskörpers (2) mit dem Harz nach einer Zentrifugiertechnik erfolgt, so dass, wenn der Basiskörper (2), an den die Harzzuführvorrichtung angepasst ist, einer Drehbewegung unterzogen wird, Harz in das Innere des Basiskörpers (2) über die Einspritzsäule (4) unter der Wirkung der Zentrifugalkraft eindringt.

3. Vorrichtung nach einem der Ansprüche 1 oder 2, wobei die Harzzuführvorrichtung überdies eine abnehmbare Pipette (6) umfasst, die geeignet ist, an die Einspritzsäule (4) angeschlossen zu werden, so dass beim Füllen Harz in das Innere des Basiskörpers (2) über die Pipette (6) und die Einspritzsäule (4) eindringt.

4. Vorrichtung nach einem der Ansprüche 1 bis 3, **dadurch gekennzeichnet, dass** die Einspritzsäule (4) in der Masse des Basiskörpers (2) angeordnet ist.

5. Vorrichtung nach einem der Ansprüche 1 bis 3, **dadurch gekennzeichnet, dass** die Einspritzsäule (4) in einem vom Basiskörper (2) getrennten Körper angeordnet ist.

6. Detektor, umfassend einen Basiskörper (2) und eine Harzzuführvorrichtung nach einem der Ansprüche 1 bis 5.

7. Detektor nach Anspruch 6, **dadurch gekennzeichnet, dass** die auszusparende Zone (3) eine elektronische Komponente umfasst.

8. Detektor nach einem der Ansprüche 6 bis 7, **dadurch gekennzeichnet, dass** die auszusparende Zone (3) eine Leuchtdiode (D) umfasst.

9. Detektor nach einem der Ansprüche 6 bis 8, **dadurch gekennzeichnet, dass** die auszusparende Zone (3) eine Verbindungsvorrichtung umfasst.

## Claims

1. Device comprising a base body (2) and a resin feed device fitted to said base body to fill said base body (2) with resin, said base body (2) comprising an area (3) not to be filled that is not to be filled by the resin after the filling is completed, said base body (2) comprising an opening (5) at the level of an upper end, the area (3) not to be filled being situated at said upper end of the base body (2) and extending inside the base body (2), said resin feed device comprising an injection column (4) coinciding with said opening (5) and extending inside the base body (2) so that, during the filling, resin gets into the interior of the base body (2) via the injection column (4), the resin feed device being **characterized in that** the injection column (4) extends more deeply inside said base body (2) than the area (3) not to be filled, to a distance configured so that when, during the filling, the resin reaches said injection column (4), air trapped in the base body (2) is compressed in the area (3) not to be filled until an equilibrium is established between the pressure of the air in the area (3) not to be filled and the pressure of the resin in the injection column (4) whereby the filling is stopped automatically, so that the area (3) not to be filled is not filled.

2. Device according to Claim 1, the filling of said base body (2) with resin being effected in accordance with a centrifuging technique so that, when the base body (2) to which the resin feed device is fitted is subjected to a rotation movement, resin penetrates to the interior of the base body (2) via the injection column (4) because of the effect of centrifugal force.

3. Device according to Claim 1 or 2, the resin feed device further comprising a removable pipette (6) that can be connected to the injection column (4) so that, during filling, resin penetrates to the interior of the base body (2) via the pipette (6) and the injection column (4).

4. Device according to any one of Claims 1 to 3, **characterized in that** the injection column (4) is put within the mass of the base body (2).

5. Device according to any one of Claims 1 to 3, **characterized in that** the injection column (4) is put in a body separate from the base body (2).

6. Detector comprising a base body (2) and a resin feed device according to any one of Claims 1 to 5.

7. Detector according to Claim 6, **characterized in that** the area (3) not to be filled contains an electronic component.

8. Detector according to Claim 6 or 7, **characterized in that** the area (3) not to be filled contains a light-emitting diode (D).

9. Detector according to any one of Claims 6 to 8, **characterized in that** the area (3) not to be filled contains a communication device.
